# EUROPÄISCHE PATENTSCHRIFT

(11) **EP 1 926 638 B1**
(45) Veröffentlichungstag und Bekanntmachung des Hinweises auf die Patenterteilung: **28.11.2012**
(21) Anmeldenummer: 06791895.3
(22) Anmeldetag: 07.09.2006
(51) Int. Cl.: B60R 19/34

(54) **VORRICHTUNG ZUR AUFPRALLDÄMPFUNG**
IMPACT DAMPING DEVICE
DISPOSITIF ANTICHOC

(30) Priorität: 14.09.2005 DE 102005043708
(43) Veröffentlichungstag der Anmeldung: 04.06.2008
(73) Patentinhaber: GM Global Technology Operations LLC, Detroit, MI 48265-3000 (US)
(72) Erfinder: ENDERICH, Thomas, 65510 Hünstetten (DE); MAUCHER, Roland, 65343 Eltville (DE)
(74) Vertreter: Strauss, Peter
(86) Internationale Anmeldenummer: PCT/EP2006/008717
(87) Internationale Veröffentlichungsnummer: WO 2007/031226

(56) Entgegenhaltungen:
- EP-A2- 0 913 599
- EP-A2- 1 464 546
- DE-A1- 3 711 692
- DE-A1- 4 300 284
- DE-A1-102004 010 572
- FR-A1- 2 747 446
- FR-A1- 2 753 246
- US-A- 3 495 474
- US-A1- 2004 169 383

## Beschreibung

Die Erfindung betrifft eine Aufprall- Dämpfungseinrichtung, insbesondere für ein Kraftfahrzeug, mit einem Querträger und mindestens einem Pralldämpfer, wobei zur Dämpfung einer Kraft (F_{L}) in Richtung der Längsachse des Pralldämpfers zwischen dem Querträger und einem Fahrzeugrahmen ein Pralldämpfer angeordnet ist.

Derartige Aufprall-Dämpfungseinrichtungen kommen gewöhnlich zur Aufpralldämpfung bei Kraftfahrzeugen zum Einsatz, welche einerseits am mit dem Stoßfänger in Verbindung stehenden Querträger und andererseits mit dem Fahrzeugrahmen verbunden sind. Im Fall eines Aufpralls, welcher außenseitig auf den Stoßfänger einwirkt, verhindert die Vorrichtung größere Beschädigungen am Fahrzeugrahmen. Der Querträger und der Fahrzeugrahmen ist mit einer hohen Steifigkeit ausgeführt, sodass die Energieaufnahme eines kleineren Aufpralls nicht durch eine plastische Verformung im Querträger bzw. im Fahrzeugrahmen erfolgt. Dies wird erreicht, indem die Aufpralldämpfung die Aufprallenergie absorbiert, wodurch die auf den Fahrzeugrahmen einwirkenden Kräfte erheblich reduziert werden. Somit können Schädigungen an Blechkomponenten des Fahrzeugrahmens vermieden werden, was mögliche Reparaturkosten erheblich senkt bzw. vermeidet. Die Vorrichtung zur Aufpralldämpfung ist dabei gewöhnlich derart ausgestaltet, dass diese durch eine teilweise plastische Verformung die Aufprallenergie absorbiert, sodass bei einer Wiederinstandsetzung des Kraftfahrzeugs nur die Vorrichtung zur Aufpralldämpfung selbst ausgetauscht werden muss.

Aus der DE 200 13 385 U1 ist eine derartige Aufprall- Dämpfungseinrichtung für Kraftfahrzeuge bekannt. Diese Aufprall- Dämpfungseinrichtung für Kraftfahrzeuge weist einen Dämpfer mit einem Deformationsrohr auf, das mindestens einen sich in einer Einschubrichtung erstreckenden Längsschlitz und eine an einem Ende des Längsschlitzes ausgebildete Ausnehmung aufweist, deren Durchmesser größer ist als die Breite des Längsschlitzes. Im Falle eines Aufpralls wird dabei das Deformationsrohr in Einschubrichtung durch ein das Deformationsrohr umgebendes Tragrohr in Richtung des Fahrzeugrahmens eingetrieben, wobei Verformungsabschnitte unter einer entsprechenden irreversiblen Verformung des Deformationsrohres Längsschlitze aufweiten, welche längs in der Wandung des Deformationsrohres verlaufen. Durch die Anordnung der Aufprall- Dämpfungseinrichtung in Fahrzeuglängsrichtung und insbesondere durch die längs des Deformationsrohres ausgebildeten Längsschlitze ist eine Energieaufnahme eines Aufpralls ausschließlich in Längsrichtung des Fahrzeugs möglich, sodass quer bzw. unter einem Winkel zum Fahrzeug einwirkende Aufprallkräfte nicht durch die Aufprall- Dämpfungseinheit absorbiert werden können. Dies kann im Falle eines schrägen Aufpralls zu erheblichen Beschädigungen des Fahrzeugrahmens führen, sodass aufwändige und damit teure Reparaturen erforderlich sein können.

Die DE 198 32 114 A1 offenbart einen Pralldämpfer für Kraftfahrzeuge, welcher ein äußeres Tragrohr und ein in diesem verschiebbares Deformationsrohr aufweist. Ferner ist ein reversibler Aufpralldämpfer mit einem verschiebbaren, über das freie Ende des Tragrohres vorstehenden zylindrischen Gehäuse und einer in dem Gehäuse reversibel gedämpft verschiebbar geführten Kolbenstange, welche mit dem Deformationsrohr zumindest in Einschubrichtung verbunden ist, vorgesehen. Weiterhin ist eine Verformungseinrichtung mit einem am Tragrohr ausgebildeten, zur Achse hin vorragenden verstärkten Vorsprung vorgesehen. Der Pralldämpfer ist dadurch gekennzeichnet, dass das freie Ende des Deformationsrohres mit einem Führungsabschnitt über das freie Ende des Tragrohres entgegen der Einschubrichtung hervorsteht und das Gehäuse in dem Führungsabschnitt verschiebbar geführt ist.

Bei den bekannten Aufprall- Dämpfungseinrichtungen tritt das Problem auf, dass durch die Führung und durch die ineinander laufenden Rohre wie Tragrohr und Deformationsrohr lediglich die Absorption eines Aufpralls in Längerichtung der Pralldämpfer möglich ist, so dass quer zum Pralldämpfer auftretende Kräfte ungemindert in den Fahrzeugrahmen eingeleitet werden. Die Befestigung der Pralldämpfer erfolgt über Schweißverbindungen, welche eine hohe Steifigkeit aufweisen und im Fall einer unter einem Winkel zur Längsachse der Rohre schräg einwirkenden Kraft aufgrund ihrer geringen Nachgiebigkeit erhebliche Schäden am Fahrzeugrahmen hervorrufen können. Somit ist ausschließlich in Längsrichtung der Dämpfungseinheit eine Nachgiebigkeit gegeben, und Krafteinwirkungen, welche unter einem Winkel zur Längsachse auftreten, können nicht gedämpft werden.

Aus dem bekannten AZT Crashreparaturtest Heck, neuer RCAR Strukturtest - 10°, Allianz Zentrum für Technik GmbH, ist bekannt, dass zur Einstufung möglicher Schädigungen an einem Fahrzeugrahmen Aufpralltests üblich sind, bei denen eine Barriere (1000kg-1400kg) mit einer Bewegung (15+1km/h) unter einem Winkel (10°) zur Fahrzeuglängsachse mit dem Kraftfahrzeug mit einer Teilüberdeckung (40%) zur Kollision gebracht werden. Dadurch entsteht ein neuer Lastfall für die Aufprall- Dämpfungseinrichtung, welcher bezogen zur Fahrzeuglängsachse eine Querkomponente der einwirkenden Kraft aufweist. Diese Querkraftkomponente kann jedoch nicht mit bisherigen Aufprall- Dämpfungseinrichtungen aufgenommen werden, ohne dass mögliche Schäden am Fahrzeugrahmen auftreten.

Aus US 2004/0169383 A1 ist eine Aufprall-Dämpfungseinrichtung für ein Kraftfahrzeug bekannt, bei dem ein Querträger vorgesehen ist, der mit einer Aufnahmevorrichtung verbunden ist, wobei die Aufnahmevorrichtung eine Deformation quer zur Längsachse der Aufprall-Dämpfungseinrichtung ermöglicht. Mit der Aufnahmevorrichtung ist ein Pralldämpfer verbunden, der eine Deformation in Längsrichtung der Aufprall-Dämpfungseinrichtung ermöglicht. Der Pralldämpfer ist über eine Stützhilfe mit einem Fahrzeugrahmen verbunden.

Aus der DE 37 11 692 A1 ist ebenfalls eine Aufprall-Dämpfungseinrichtung für ein Kraftfahrzeug bekannt.

Es ist daher die Aufgabe der vorliegenden Erfindung, eine Aufprall- Dämpfungseinrichtung zu schaffen, welche sowohl einen Aufprall in Längsrichtung des Kraftfahrzeugs als auch einen Aufprall mit einer quer zur Kraftfahrzeuglängsachse verlaufenden Krafteinwirkung dämpft.

Diese Aufgabe wird ausgehend von einer Aufprall- Dämpfungseinrichtung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Verbindung des Pralldämpfers zum Fahrzeugrahmen eine Aufnahmevorrichtung umfasst, wobei diese mindestens eine Deformationszone aufweist, um über eine Materialdeformation in der Deformationszone eine Dämpfung einer quer zur Längsachse des Pralldämpfers eingeleiteten Kraft zu bewirken, wobei die Aufnahmevorrichtung mit einer topfförmigen Auswölbung zur Aufnahme des Pralldämpfers ausgeführt ist, wobei die Aufnahmevorrichtung quer zur Längsachse des Pralldämpfers angeordnet und außenseitig mit dem Fahrzeugrahmen verbunden ist.

Diese Lösung bietet den Vorteil, dass eine Aufprall- Dämpfungseinrichtung geschaffen
wird, welche mittels einer Deformationszone eine kontrollierte Energieaufnahme eines Aufpralls ermöglicht, welcher zumindest anteilig quer zur Fahrzeuglängsrichtung erfolgt. Die Aufprall-Dämpfungseinrichtung verbindet dabei den Pralldämpfer mit dem Fahrzeugrahmen, sodass diese einerseits den Pralldämpfer aufnimmt und andererseits mit dem Fahrzeugrahmen, beispielsweise über eine Verschraubung, verbunden ist. Vorteilhafterweise weist die Aufprall-Dämpfungseinrichtung dabei eine Deformationszone auf, welche im Kraftfluss zwischen dem mit dem Querträger des Kraftfahrzeugs verbundenen Pralldämpfer und dem Fahrzeugrahmen selbst liegt. Der Pralldämpfer absorbiert folglich die Stoßkomponente längs des Fahrzeugs und bei einer seitlichen Einwirkung einer Kraft durch einen Aufprall auf die Stoßstange ruft diese in der Deformationszone eine plastische Verformung hervor, indem der Pralldämpfer durch eine Stauchbewegung oder eine seitliche Drehbewegung in der Aufprall-Dämpfungseinrichtung wegdreht. Folglich werden Stoßkomponenten quer zur Fahrzeuglängsachse von der Aufprall- Dämpfungseinrichtung durch die plastische Formänderung in der Deformationszone der Aufprall-Dämpfungseinrichtung absorbiert, und größere Schäden am Fahrzeugrahmen können vermieden werden.

Werkstoff ist für eine Energieaufnahme durch eine Deformierung vorteilhaft, da dieser nach Durchlaufen eines elastischen Bereiches ein großes Formänderungsvermögen bietet, hierbei kann insbesondere ein Stahlwerkstoff oder eine Aluminiumlegierung eingesetzt werden. Neben dem Einsatz eines metallischen Werkstoffes ist auch die Anwendung von Kunststoffen möglich und ebenso vorteilhaft. Der Pralldämpfer ist mit der Aufnahmevorrichtung verbunden, wobei der Pralldämpfer im Bereich der topfförmigen Auswölbung mit der Aufnahmevorrichtung in ein in der Auswölbung eingebrachtes Loch hineingeführt bzw. aufgesetzt ist, wobei die Verbindung über eine Schweiß- oder eine Pressverbindung hergestellt sein kann. Außenseitig ist die Aufnahmevorrichtung mit dem Fahrzeugrahmen verbunden, wobei die Verbindung beispielsweise als Schraubenverbindung ausgeführt sein kann, und die Schrauben durch Löcher in den Eckbereichen in der Aufnahmevorrichtung hindurchgeführt sind. Über diese Anordnung wird eine optimale Verbindung geschaffen, um eine maximale Energieaufnahme in einem Crashfall mit Querkraftkomponente zu ermöglichen.

Vorteilhafterweise ist die topfförmige Auswölbung einteilig oder mehrteilig stufenartig aus der Aufnahmevorrichtung herausgebildet, sodass ein Deformationsraum unterhalb der Auswölbung entsteht. Damit kann zur Deformation der Aufnahmevorrichtung vorteilhafterweise ein Deformationsraum genutzt werden. Dabei knickt die Aufnahmevorrichtung im Fall eines Aufpralls mit einer hinreichend großen Querkraftkomponente derart ein, dass die topfförmige Auswölbung sich über eine plastische Verformung in den Deformationsraum bewegt. Die Aufnahmevorrichtung kann dabei einerseits einseitig wegknicken, sodass sich der Pralldämpfer unter einem Winkel in der Auswölbung anstellt oder sich andererseits in die topfförmige Auswölbung eindrückt, wenn der Aufprall eine entsprechend große Kraftkomponente in Fahrzeuglängsrichtung aufweist. Der Deformationsraum bietet dabei einen hinreichend großen Abstand der Auswölbung bzw. der Verbindungsstelle des Pralldämpfers zum Fahrzeugrahmen, sodass der Fahrzeugrahmen auch bei einer größeren Deformation nicht beschädigt wird.

Aus konstruktiven Gründen ist es von besonderem Vorteil, dass die Aufnahmevorrichtung eine Aufnahmeplatte und eine mit der Aufnahmeplatte verbundene Grundplatte aufweist und dass die Grundplatte ein Loch aufweist, welches mittig in der Längsachse angeordnet ist. Damit kann eine sehr robuste Aufnahmevorrichtung geschaffen werden, welcher in sich eine große Steifigkeit aufweist und kontrolliert nur in der Deformationszone im Fall eines Aufpralls Deformationen ermöglicht. Im Fall eines Ausreißens der Aufnahmeplatte kann durch eine vorbestimmte, begrenzte Festigkeit der Verbindung der Aufnahmeplatte mit der Grundplatte, welche beispielsweise aus einer Schraubenverbindung oder einer Schweißverbindung bestehen kann, vorteilhafterweise der Fahrzeugrahmen unbeschädigt bleiben. Der Vorteil der Anordnung eines Loches in der Grundplatte der Aufprall- Dämpfungseinrichtung ist das steuerbare Knickverhalten des Pralldämpfers in der Aufnahmevorrichtung bzw. in der Aufnahmeplatte. Weist der Pralldämpfer ein Rohrelement auf, so kann dieses durch das oben gelegene Loch der Aufnahmeplatte hindurchlaufen und sich in Richtung des Loches in der Grundplatte erstrecken. Dabei kann bei einem Aufprall die topfförmige Auswölbung in Richtung der Grundplatte eingestaucht werden, wobei sich das Rohrelement in das Loch in der Grundplatte bewegt. Bei einem Abknicken während der Deformation im Fall eines Aufpralls kann das Ende des Rohrelements an den Rand des Loches in der Grundplatte stoßen, wodurch sich der Widerstand zum Abknicken erheblich erhöht. Je weiter sich das Rohrelement durch eine Stauchung der topfförmigen Auswölbung in bzw. durch das Loch in der Grundplatte bewegt, desto größer wird der mögliche Knickwinkel.

Eine vorteilhafte Ausgestaltung der Aufprall-Dämpfungseinrichtung ist dadurch gekennzeichnet, dass der Pralldämpfer ein mit dem Querträger verbundenes inneres Rohrelement und ein mit der Aufnahmevorrichtung verbundenes äußeres Rohrelement aufweist, wobei sich das innere Rohrelement in das äußere Rohrelement erstreckt, und eine Relativbewegung beider Rohrelemente zueinander eine Dämpfungswirkung in Richtung der Längsachse des Pralldämpfers hervorruft. Diese Ausgestaltung der Aufprall- Dämpfungseinrichtung weist vorteilhafterweise eine einfache und sehr robuste Konstruktion auf, wobei über die Art der Verpressung beider Rohelemente das Kraft- Verformungsverhalten eingestellt werden kann. Ebenso sind alternative Aufführungen eines Pralldämpfers zur Aufnahme von Längskräften einsetzbar, welche eine Form aufweisen, die eine Anordnung zwischen einem Querträger und einem Fahrzeugrahmen ermöglicht, und ein Zusammenwirken mit der Aufnahmevorrichtung erlaubt.

Vorteilhafterweise ist die Aufprall- Dämpfungseinrichtung zur Aufpralldämpfung an der Vorderseite des Kraftfahrzeugs und / oder an der Hinterseite des Kraftfahrzeugs angeordnet. Damit kann sowohl der Rahmen des vorderen Fahrzeugbereiches als auch des hinteren Fahrzeugbereiches effektiv vor größeren Beschädigungen geschützt werden. Bei der Anordnung der Aufprall- Dämpfungseinrichtung zwischen dem vorderen Querträger und dem Fahrzeugrahmen kann der Pralldämpfer im Längsträger der Fahrzeugkarosserie angeordnet sein, um einen minimalen Platzbedarf zu erfordern.

Eine weitere die Erfindung verbessernde Maßnahme sieht vor, dass der Pralldämpfer und die Aufnahmevorrichtung zwischen dem Querträger und dem Fahrzeugrahmen ein- oder mehrfach, vorzugsweise zweifach außenseitig am Querträger angeordnet ist. Mit einer zweifachen Anordnung der Vorrichtung kann eine optimale Befestigungslösung des Querträgers zum Fahrzeugrahmen gefunden werden, zumal sowohl die linke als auch die rechte Hinterseite des Kraftfahrzeugs eine Aufprall- Dämpfungsvorrichtung aufweist, sodass ein Aufprall aus beiden Richtungen optimal aufgefangen werden kann.

Um die Aufprall- Dämpfungsvorrichtung derart anzuordnen, dass ein Aufprall unter einem Winkel zur Fahrzeuglängsachse optimal aufgefangen werden kann, ist vorgesehen, dass die vorzugsweise zweifach angeordneten Pralldämpfer mit dem jeweils quer zur Längsachse der Pralldämpfer angeordneten Aufnahmevorrichtungen unter einem Winkel zwischen dem Querträger und dem Fahrzeugrahmen angestellt sind, sodass sich die Längsachsen der Pralldämpfer kraftfahrzeugseitig schneiden. Somit sind die Pralldämpfer nach außen zur Fahrzeugseite angestellt, und können vorteilhafterweise bei einem Aufprall in der Aufnahmeplatte durch eine Deformation in Richtung der Fahrzeuglängsachse eindrehen, und den Aufprall optimal aufnehmen und die Aufprallenergie absorbieren.

Vorteilhafterweise weist zumindest die Aufnahmeplatte Freischnitte zur kontrollierten Schwächung der Struktur im Bereich der Deformationszone auf, um das Deformationsverhalten der Aufnahmevorrichtung durch quer zur Längsachse der Rohrelemente eingeleitete Kräfte einzustellen und die Aufnahmeplatte der Aufnahmevorrichtung weist eine Materialdicke auf, welche das zu tragende Lastniveau der quer zur Längsachse der Rohrelemente eingeleiteten Kräfte einstellt und damit das Deformationsverhalten in der Deformationszone beeinflussbar macht. Somit kann gezielt eine Schwächung der Aufnahmevorrichtung erzeugt werden, um die maximal auftretenden Kräfte zu limitieren, bis eine plastische Verformung in der Deformationszone eintritt. Die Limitierung der auf die Aufnahmevorrichtung einwirkenden Kraft bis zur Deformierung des Materials in der Deformationszone kann dabei ebenfalls über die Dicke des Blechmaterials eingestellt werden, so dass eine geringere Blechdicke ein frühzeitigeres Deformieren des Metallkörpers bewirkt, was schon bei geringen Kräften auftreten kann. Bei einem Kunststoffmaterial der Aufnahmevorrichtung kann weiterhin über die Wahl des Kunststoffes und eine eventuelle Verrippung das Verformungsverhalten der Aufnahmevorrichtung eingestellt werden.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigen:
Fig. 1: eine perspektivische Ansicht der Aufprall- Dämpfungseinrichtung;
Fig. 2: eine schematische Darstellung eines Querschnittes der Aufprall- Dämpfungseinrichtung;
Fig. 3: einen Querschnitt einer Ausführungsform einer Aufprall- Dämpfungseinrichtung mit einer einteilig ausgeführten Aufnahmevorrichtung; und
Fig. 4: einen Querschnitt einer weiteren Ausführungsform einer Aufprall- Dämpfungseinrichtung mit einem aus einer Aufnahmeplatte und einer Grundplatte ausgeführten Aufnahmevorrichtung.

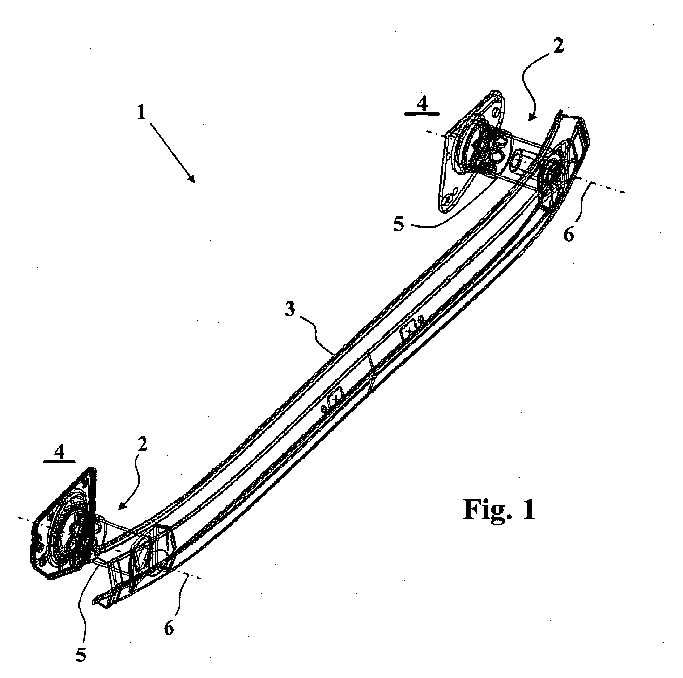

Die in Fig. 1 gezeigte perspektivische Ansicht zeigt eine Aufprall- Dämpfungseinrichtung 1 mit einem Querträger 3, wobei zwei Pralldämpfer 5 jeweils in etwa endseitig am Querträgers 3 an der linken und rechten Außenseite des Fahrzeugrahmens 4 angeordnet sind. Der Querträger 3 ist als U- Profil ausgebildet und befindet sich von außen nicht sichtbar hinter dem Stoßfänger (nicht dargestellt) des Kraftfahrzeugs 2. Die Aufprall- Dämpfungseinrichtung 1 ist am Fahrzeugrahmen 4 lösbar montiert und verbindet einen rohr- bzw. zylinderförmigen Pralldämpfer 5 mit dem Fahrzeugrahmen 4, wobei sich die Längsachsen 6 der Pralldämpfer 5 im Wesentlichen senkrecht zum Querträger 3 erstrecken und diesen somit gemäß der Länge der Pralldämpfer 5 beabstandet zum Fahrzeugrahmen 4 anordnen.

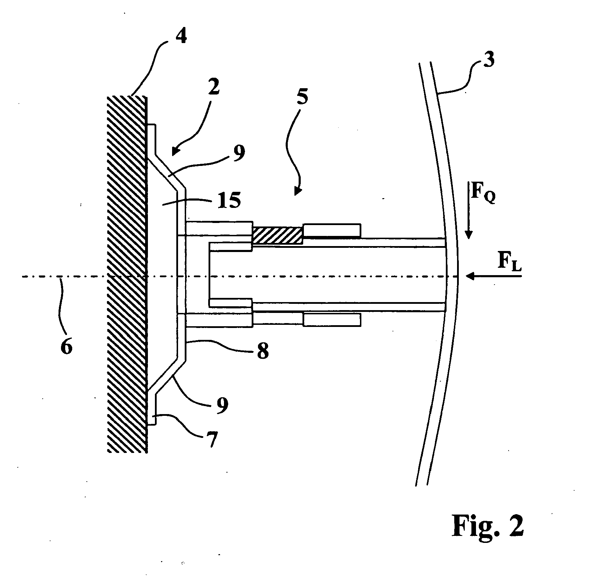

In Fig. 2 ist eine schematische Darstellung eines Querschnittes einer Aufprall- Dämpfungseinrichtung 1 gezeigt, wobei diese den Pralldämpfer 5 mit dem Fahrzeugrahmen 4 verbindet, welcher Teil des Kraftfahrzeugs 2 ist. Die Aufprall- Dämpfungseinrichtung 1 weist eine Aufnahmevorrichtung 7 auf, welche gemäß dem vorliegenden Ausführungsbeispiel aus einem Blech besteht, wobei das Blech einen rechteckigen Grundriss aufweist. Die Querschnittansicht der Aufnahmevorrichtung 7 zeigt eine in diesem mittig ausgebildete topfförmige Auswölbung 8, welche mittig den Pralldämpfer 5 aufnimmt. Außenseitig ist die Aufnahmevorrichtung 7 mit dem Fahrzeugrahmen 4 verbunden, wobei die lösbare Verbindung über -hier nicht näher dargestellte- Schrauben erfolgt. Zwischen der topfförmigen Auswölbung 8 und dem mit dem Fahrzeugrahmen 4 verbundenen Teil der Aufnahmevorrichtung 7 erstreckt sich eine Deformationszone 9. Bei Auftreten einer Kraft F_{Q} quer zur Längsachse 6 des Pralldämpfers 5 deformiert die Aufnahmevorrichtung 7 im Bereich der Deformationszone 9, und der Pralldämpfer 5 kann sich gelenkartig in der Aufprall- Dämpfungseinrichtung 1 verdrehen. Der Anteil der Stoßenergie des Aufpralls quer zur Fahrzeuglängsrichtung kann somit als Deformationsarbeit in der Aufnahmevorrichtung 7 dissipiert werden, und die in den Fahrzeugrahmen 4 eingeleiteten Kräfte werden damit wesentlich vermindert, und eine Beschädigung des Fahrzeugrahmens 4 wird vermieden.

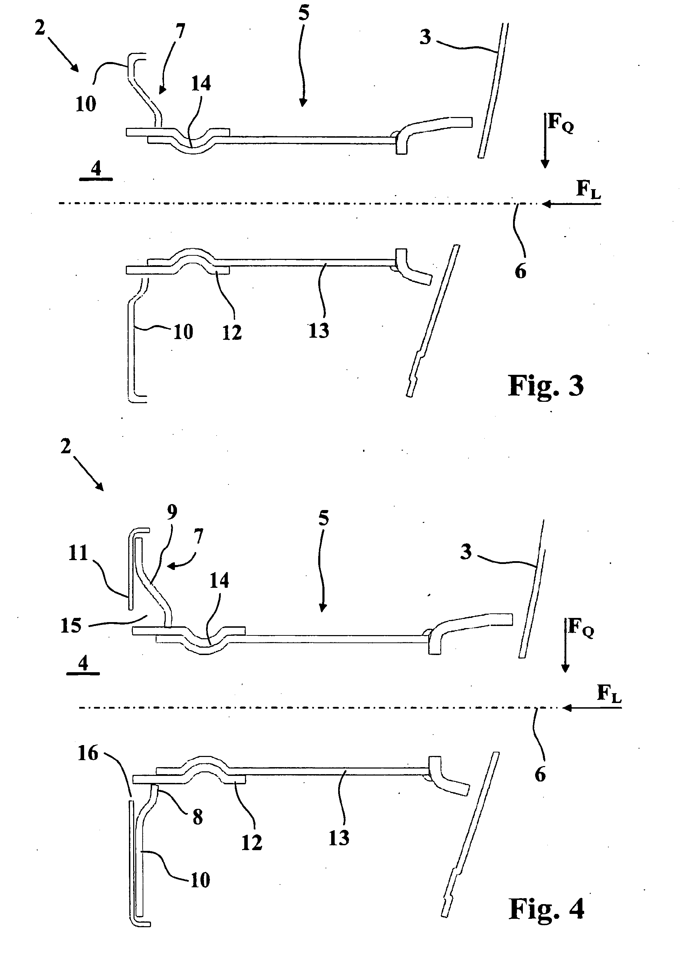

Die Figuren 3 und 4 zeigen Querschnitte je einer weiteren Ausführungsform einer Aufprall- Dämpfungseinrichtung 1, wobei die Aufprall- Dämpfungseinrichtung 1 aus Fig. 3 eine einteilig ausgeführte Aufnahmevorrichtung 7 aufweist und die Aufprall- Dämpfungseinrichtung 1 aus Fig. 4 eine Aufnahmevorrichtung 7 aufweist, welcher aus einer Aufnahmeplatte 10 und einer Grundplatte 11 aufgebaut ist. Die Aufnahmevorrichtung 7 aus Fig. 3 ist nicht symmetrisch aufgebaut, da diese an die Kontur des Fahrzeugrahmens 4 angepasst ist. Die Aufnahmeplatte 10 weist ein Loch auf, wobei sich ein äußeres Rohrelement 12 durch das Loch hindurch erstreckt. Das äußere Rohrelement 12 ist mit einem inneren Rohrelement 13 verpresst, wobei sich der Pressverband 14 bei einem Einwirken einer Längskraft F_{L} in den Pralldämpfer 5 durch eine Verformung der Rohrelemente 12 und 13 lösen kann und die Aufprallenergie durch die plastische Formänderung absorbiert.

In Fig. 4 weist die zweiteilige Aufnahmevorrichtung 7 eine Aufnahmeplatte 10 und eine Grundplatte 11 auf, wobei beide Platten 10 und 11 außenseitig miteinander verbunden sind. Mittig erstreckt sich die topfförmige Auswölbung 8 in der Aufnahmeplatte 10 entfernt von der Grundplatte 11, sodass zwischen der Grundplatte 11 und der topfförmigen Auswölbung 8 ein Deformationsraum 15 gebildet wird. Bei einem Aufprall insbesondere quer zur Längsachse 6 des Pralldämpfers 5 erfolgt in der Deformationszone 9 eine Verformung der Aufnahmevorrichtung 7 im Bereich der Aufnahmeplatte 10, sodass durch ein Einknicken und/ oder ein Einstauchen der topfförmigen Auswölbung 8 in Richtung der Grundplatte 11 ein Raum für Verformungen vorhanden ist, sodass die Deformation im Deformationsraum 15 erfolgt und nicht die Fahrzeugkarosserie schädigt. Das bzw. die Rohrelemente 12 und 13 des Pralldämpfers 5 bewegen sich insbesondere bei einem Stauchvorgang der topfförmigen Auswölbung 8 in Richtung der Grundplatte 11, wobei die Grundplatte 11 ein Loch 16 aufweist, welches mittig in der Längsachse 6 angeordnet ist und einen Durchmesser hat, welcher größer ist als der Durchmesser des inneren bzw. äußeren Rohrelements 12, 13. Wenn das oder die Rohrelemente 12 und/ oder 13 durch eine Krafteinwirkung in Richtung der Grundplatte 11 bewegt werden, so kann sich das Rohrelement 12, 13 durch das Loch 16 hindurch bewegen und bei einem Abknicken an den Rand des Loches 16 stoßen, wodurch die Knickbewegung aufgrund des Widerstandes begrenzt wird. Dabei ist der mögliche Knickwinkel zwischen der Längsachse 6 des Pralldämpfers 5 und der Fahrzeuglängsachse um so größer, je weiter die topfförmige Auswölbung 8 durch eine Längskraft F_{L} in Richtung der Grundplatte 11 gestaucht wird.

Die Erfindung beschränkt sich in ihrer Ausführung nicht auf die vorstehend angegebenen Ausführungsbeispiele. Es ist eine Mehrzahl von Varianten denkbar, welche von der dargestellten Lösung auch bei grundsätzlich anders gearteten Ausführungen Gebrauch macht.

## Patentansprüche

1. Aufprall- Dämpfungseinrichtung (1), insbesondere für ein Kraftfahrzeug (2), mit einem Querträger (3) und mindestens einem Pralldämpfer (5), wobei zur Dämpfung einer Kraft (FL) in Richtung der Längsachse (6) des Pralldämpfers (5) zwischen dem Querträger (3) und einem Fahrzeugrahmen (4) der Pralldämpfer (5) angeordnet ist, wobei die Verbindung des Pralldämpfers (5) zum Fahrzeugrahmen (4) eine Aufnahmevorrichtung (7) umfasst, wobei die Aufnahmevorrichtung (7) mindestens eine Deformationszone (9) aufweist, um über eine Materialdeformation in der Deformationszone (9) eine Dämpfung einer quer zur Längsachse (6) des Pralldämpfers (5) eingeleiteten Kraft zu bewirken, **dadurch gekennzeichnet dass** die Aufnahmevorrichtung (7) mit einer topfförmigen Auswölbung (8) zur Aufnahme des Pralldämpfers (5) ausgeführt ist, wobei die Aufnahmevorrichtung (7) quer zur Längsachse (6) des Pralldämpfers (5) angeordnet und außenseitig mit dem Fahrzeugrahmen (4) verbunden ist.

2. Aufprall- Dämpfungseinrichtung (1) nach Anspruch 1, **dadurch gekennzeichnet, dass** die topfförmige Auswölbung (8) einteilig oder mehrteilig stufenartig aus der Aufnahmevorrichtung (7) herausgebildet ist, sodass ein Deformationsraum (15) unterhalb der Auswölbung (8) entsteht.

3. Aufprall- Dämpfungseinrichtung (1) nach Anspruch 1 oder 2, **dadurch gekennzeichnet, dass** die Aufnahmevorrichtung (7) eine Aufnahmenplatte (10) und eine mit der Aufnahmeplatte (10) verbundene Grundplatte (11) aufweist.

4. Aufprall- Dämpfungseinrichtung (1) nach Anspruch 3, **dadurch gekennzeichnet, dass** die Grundplatte (11) ein Loch (16) aufweist, welches mittig in der Längsachse (6) angeordnet ist.

5. Aufprall- Dämpfungseinrichtung nach Anspruch 4, **dadurch gekennzeichnet, dass** der Pralldämpfer (5) ein Rohrelement (12, 13) aufweist und das Rohrelement (12, 13) bei einer Deformation der Aufnahmevorrichtung (7) in das Loch (16) der Grundplatte (11) bewegbar ist.

6. Aufprall- Dämpfungseinrichtung (1) nach einem der vorgenannten Ansprüche, **dadurch gekennzeichnet, dass** der Pralldämpfer (5) ein mit dem Querträger (3) verbundenes inneres Rohrelement (13) und ein mit der Aufnahmevorrichtung (7) verbundenes äußeres Rohrelement (12) aufweist, wobei sich das innere Rohrelement (13) in das äußere Rohrelement (12) erstreckt, und eine Relativbewegung beider Rohrelemente (12, 13) zueinander eine Dämpfungswirkung in Richtung der Längsachse (6) des Pralldämpfers (5) hervorruft.

7. Aufprall- Dämpfungseinrichtung (1) nach einem der vorgenannten Ansprüche, **dadurch gekennzeichnet, dass** die Aufprall- Dämpfungseinrichtung (1) zur Aufpralldämpfung an der Vorderseite des Kraftfahrzeugs (1) und/ oder an der Hinterseite des Kraftfahrzeugs (2) angeordnet ist.

8. Aufprall- Dämpfungseinrichtung (1) nach einem der vorgenannten Ansprüche, **dadurch gekennzeichnet, dass** der Pralldämpfer (5) und die Aufnahmevorrichtung (7) zwischen dem Querträger (3) und dem Fahrzeugrahmen (4) ein- oder mehrfach, vorzugsweise zweifach außenseitig am Querträger (3) angeordnet sind.

9. Aufprall- Dämpfungseinrichtung (1) nach einem der vorgenannten Ansprüche, **dadurch gekennzeichnet, dass** die vorzugsweise zweifach angeordneten Pralldämpfer (5) mit dem jeweils quer zur Längsachse (6) der Pralldämpfer (5) angeordneten Aufnahmevorrichtungen (7) unter einem Winkel zwischen dem Querträger (3) und dem Fahrzeugrahmen (4) angestellt sind, sodass sich die Längsachsen (6) der Pralldämpfer (5) kraftfahrzeugseitig schneiden.

## Claims

1. An impact damping device (1), especially for a motor vehicle (2), comprising a cross-member (3) and at least one impact damper (5), with the impact damper (5) being arranged between the cross member (3) and a vehicle frame (4) in order to dampen a force (FL) in the direction of the longitudinal axis (6) of the impact damper (5), with the connection of the impact damper (5) to the vehicle frame (4) comprising a receiving apparatus (7), with the receiving apparatus (7) having at least one deformation zone (9) in order to produce a damping of a force introduced transversely with respect to the longitudinal axis (6) of the impact damper (5) by means of a deformation of the material in the deformation zone (9), **characterized in that** the receiving apparatus (7) is provided with a cup-shaped bulge (8) for accommodating the impact damper (5), with the receiving apparatus (7) being arranged transversely to the longitudinal axis (6) of the impact damper (5) and being connected to the vehicle frame (4) on the outside.

2. An impact damping device (1) according to claim 1, **characterized in that** the cup-like bulge (8) is formed out of the receiving apparatus (7) integrally or in several parts in a stepped manner, so that a deformation space (15) is obtained beneath the bulge (8).

3. An impact damping device (1) according to claim 1 or 2, **characterized in that** the receiving apparatus (7) comprises a receiving plate (10) and a base plate (11) connected to the receiving plate (10).

4. An impact damping device (1) according to claim 3, **characterized in that** the base plate (11) comprises a hole (16) which is arranged centrally in the longitudinal axis (6).

5. An impact damping device (1) according to claim 4, **characterized in that** the impact damper (5) comprises a tubular element (12, 13), and the tubular element (12, 13) can be moved into the hole (16) of the base plate (11) during a deformation of the receiving apparatus (7).

6. An impact damping device (1) according to one of the preceding claims, **characterized in that** the impact damper (5) comprises an inner tubular element (13) which is connected with the cross-member (3) and an outer tubular element (12) which is connected with the receiving apparatus (7), with the inner tubular element (13) extending into the outer tubular element (12), and a relative movement of both tubular elements (12, 13) with respect to each other causes a damping effect in the direction of the longitudinal axis (6) of the impact damper (5).

7. An impact damping device (1) according to one of the preceding claims, **characterized in that** the impact damping device (1) is arranged for impact damping on the front side of the motor vehicle (1) and/or on the rear side of the motor vehicle (2).

8. An impact damping device (1) according to one of the preceding claims, **characterized in that** the impact damper (5) and the receiving apparatus (7) are arranged once or several times, preferably twice, outside on the cross-member (3) between the cross-member (3) and the vehicle frame (4).

9. An impact damping device (1) according to one of the preceding claims, **characterized in that** the impact dampers (5) which are preferably arranged twice are oriented together with the receiving apparatuses (7) respectively arranged transversely to the longitudinal axis (6) of the impact dampers (5) under an angle between the cross-member (3) and the vehicle frame (4), so that the longitudinal axes (6) of the impact dampers (5) intersect one another on the motor vehicle side.

## Revendications

1. Dispositif amortisseur de collisions (1), en particulier pour un véhicule à moteur (2), avec une traverse (3) et au moins un pare-chocs (5), dans lequel, pour amortir une force (FL) dans le sens de l'axe longitudinal (6) du pare-chocs (5), le pare-chocs (5) est disposé entre la traverse (3) et un châssis de véhicule (4), dans lequel la liaison du pare-chocs (5) au châssis de véhicule (4) comprend un dispositif de réception (7), lequel dispositif de réception (7) présente au moins une zone déformable (9) pour réaliser, par une déformation du matériau dans la zone déformable (9), un amortissement d'une force exercée perpendiculairement à l'axe longitudinal (6) du pare-chocs (5), **caractérisé en ce que** le dispositif de réception (7) est muni d'un bombement en forme de pot (8) pour recevoir le pare-chocs (5), le dispositif de réception (7) étant disposé perpendiculairement à l'axe longitudinal (6) du pare-chocs (5) et relié sur l'extérieur au châssis de véhicule (4).

2. Dispositif amortisseur de collisions (1) selon la revendication 1, **caractérisé en ce que** le bombement en forme de pot (8) est formé en gradins en une partie ou en plusieurs parties à partir du dispositif de réception (7), de sorte qu'il se crée un espace de déformation (15) en dessous du bombement (8).

3. Dispositif amortisseur de collisions (1) selon la revendication 1 ou 2, **caractérisé en ce que** le dispositif de réception (7) présente une plaque de réception (10) et une plaque de base (11) reliée à la plaque de réception (10).

4. Dispositif amortisseur de collisions (1) selon la revendication 3, **caractérisé en ce que** la plaque de base (11) présente un trou (16) qui est disposé au centre dans l'axe longitudinal (6).

5. Dispositif amortisseur de collisions selon la revendication 4, **caractérisé en ce que** le pare-chocs (5) présente un élément tubulaire (12, 13) et l'élément tubulaire (12, 13) peut se déplacer, en cas de déformation du dispositif de réception (7), dans le trou (16) de la plaque de base (11).

6. Dispositif amortisseur de collisions (1) selon l'une des revendications précédentes, **caractérisé en ce que** le pare-chocs (5) présente un élément tubulaire intérieur (13) relié à la traverse (3) et un élément tubulaire extérieur (12) relié au dispositif de réception (7), l'élément tubulaire intérieur (13) s'étendant dans l'élément tubulaire extérieur (12) et un mouvement relatif des deux éléments tubulaires (12, 13) l'un par rapport à l'autre produisant l'effet d'amortissement dans la direction de l'axe longitudinal (6) du pare-chocs (5).

7. Dispositif amortisseur de collisions (1) selon l'une des revendications précédentes, **caractérisé en ce que** le dispositif amortisseur de collisions (1) est disposé en vue d'amortir les collisions à l'avant du véhicule à moteur (1) et/ou à l'arrière du véhicule à moteur (2).

8. Dispositif amortisseur de collisions (1) selon l'une des revendications précédentes, **caractérisé en ce que** le pare-chocs (5) et le dispositif de réception (7) sont disposés à l'extérieur sur la traverse (3) entre la traverse (3) et le châssis de véhicule (4) en un ou plusieurs exemplaires, de préférence en deux exemplaires.

9. Dispositif amortisseur de collisions (1) selon l'une des revendications précédentes, **caractérisé en ce que** les pare-chocs (5) disposés de préférence en deux exemplaires sont placés avec les dispositifs de réception (7) disposés perpendiculairement à l'axe longitudinal (6) des pare-chocs (5) entre la traverse (3) et le châssis de véhicule (4) en formant un angle, de telle sorte que les axes longitudinaux (6) des pare-chocs (5) se coupent du côté du véhicule à moteur.
